# FASCICULE DE BREVET EUROPEEN

(11) **EP 2 664 834 B1**
(45) Date de publication et mention de la délivrance du brevet: **19.11.2014**
(21) Numéro de dépôt: 13167775.9
(22) Date de dépôt: 15.05.2013
(51) Int. Cl.: F16L 37/56, H01R 13/631

(54) **Ensemble de raccord et Assemblage correspondant**
Anschlusseinheit und entsprechender Zusammenbau
Coupling assembly and corresponding assembly

(30) Priorité: 16.05.2012 FR 1254537
(43) Date de publication de la demande: 20.11.2013
(73) Titulaire: STAUBLI FAVERGES, 74210 FAVERGES (FR)
(72) Inventeur: Tiberghien, Alain-Christophe, 74320 Sevrier (FR); Durieux, Christophe, 73200 Gilly Sur Isere (FR); Bahno, Igor, 73400 Ugine (FR)
(74) Mandataire: Myon, Gérard Jean-Pierre

(56) Documents cités:
- DE-B3-102010 035 868
- US-B1- 6 422 886

## Description

La présente invention concerne un ensemble de raccord comprenant une plaque de raccord équipée d'au moins un élément de raccord électrique et/ou fluidique, l'élément de raccord définissant une direction de raccordement à un élément de raccord électrique et/ou fluidique complémentaire, un support, la plaque de raccord étant apte à se déplacer par rapport au support dans une position décalée dans un plan perpendiculaire à la direction de raccordement pour le raccordement des élément de raccord et un dispositif de flottabilité entre la plaque de raccord et le support, le dispositif de flottabilité étant apte à recentrer la plaque de raccord dans une position de repos déterminée de la plaque de raccord par rapport au support en configuration déconnectée de la plaque de raccord, depuis ladite position décalée de la plaque.

Elle s'applique en particulier à une plaque de raccord munie d'éléments de raccords électrique et/ou fluidique. Plus spécifiquement, elle s'applique pour le raccordement en aveugle d'un réservoir de liquide muni des éléments de raccord complémentaires.

Il est connu de rendre une plaque de raccord flottante par rapport à un support pour s'adapter à d'éventuels défauts d'alignement entre la plaque et sa plaque complémentaire et de recentrer la plaque de raccord en position moyenne par rapport au support après déconnexion pour s'affranchir par exemple des défauts initiaux dus à la gravité. La flottabilité d'une prochaine connexion sera alors aussi tolérante que la précédente. Une telle plaque de raccord est divulguée par exemple dans JP61267277. Le recentrage de la plaque en position moyenne est assuré par des surfaces coniques que met en contact un ressort. Pour rendre la plaque de raccord flottante, il est nécessaire de repousser par rapport à la plaque flottante un cône fixé au support hors de son logement ménagé sur la plaque flottante en repoussant la plaque à l'encontre du ressort. Ceci impose des efforts de connexion importants, oblige à une course de connexion importante et rend le dispositif de flottabilité encombrant. De plus, la position de la plaque flottante selon la direction de raccordement dépend des défauts d'alignement et il est donc nécessaire pour garantir la bonne connexion des plaques de prévoir une surcourse de raccordement, ce qui pénalise l'encombrement de l'assemblage formé par la plaque et la plaque complémentaire. Une autre plaque de raccordement est connue du document US 6 422 886.

L'invention a pour but de résoudre au moins l'un de ces inconvénients.

A cet effet, l'invention a pour objet un ensemble tel que défini ci-dessus, caractérisé en ce que le dispositif de flottabilité comprend d'une part un élément de recentrage solidaire dans le plan de la plaque de raccord et d'autre part des moyens de rappel élastique d'une surface de came de l'élément de recentrage au contact d'une surface de contre came ménagée sur le support, la plaque de raccord et le support étant distincts, en ce que la surface de came et/ou la surface de contre came est inclinée par rapport à la direction de raccordement, en ce que la plaque de raccord est fixe selon la direction de raccordement par rapport au support, en ce que l'élément de recentrage est mobile selon la direction de raccordement par rapport à la plaque de raccord et par rapport au support entre la position de repos et ladite position décalée de la plaque, en ce qu'une plaque butée et la plaque de raccord sont disposées de part et d'autre du support selon la direction de raccordement, et en ce que l'élément de recentrage est disposé entre la plaque butée et le support..

Selon des modes de réalisation, l'invention comporte l'une ou plusieurs des caractéristiques suivantes :
- la surface de came est une surface de révolution et dans lequel notamment la surface de came est une surface externe conique ;
- l'élément de recentrage est pourvu d'un alésage central et est mobile en coulissement sur un axe de guidage fixé au premier élément parmi la plaque de raccord et le support ;
- l'angle (α) d'inclinaison de la surface de came et/ou de la surface de contre came par rapport à la direction de raccordement (Z) est compris entre 30° et 60° ;
- la surface de contre came coopère avec la surface de came de l'élément de recentrage en position de repos et en position décalée de la plaque ;
- la surface de contre came et la surface de came sont complémentaires, notamment inclinées du même angle (α) ;
- l'élément de recentrage comporte un prolongement, selon la direction de raccordement (Z) par rapport à la surface de came, formant surface de guidage de l'élément de recentrage selon la direction de raccordement (Z) ;
- les moyens de rappel élastique comprennent un ressort disposé entre l'élément de recentrage et un élément solidaire de l'élément de recentrage dans le plan (X-Y) ;
- la plaque de raccord est fixe selon la direction de raccordement par rapport au support, aux jeux de fonctionnement près ;
- la plaque de raccord et la plaque butée forment un ensemble solidaire flottant monté en sandwich autour du support ;
- les moyens de rappel élastique sont logés au moins partiellement dans un évidement de l'élément de recentrage ;
- un ensemble tel que décrit ci-dessus comprenant, pour chaque élément de recentrage, une colonne de guidage coaxiale à l'élément de recentrage associé ;
- le support comprend une surface formant une butée selon une direction (X, Y) perpendiculaire à la direction de raccordement à la plaque de raccord par rapport au support dans une position décalée de la plaque ;
- l'ensemble comprend une glissière de réception fixée au support s'étendant dans la direction de raccordement (Z) et adaptée pour guider l'élément de raccord électrique et/ou fluidique complémentaire à l'élément de raccord dans la phase d'accouplement.

L'invention a également pour objet un assemblage d'un ensemble tel que décrit ci-dessus et d'un ensemble complémentaire, l'ensemble complémentaire comprenant au moins un raccord fluidique et/ou électrique complémentaire de chaque élément de raccord électrique ou fluidique fixé à un réservoir de liquide.

L'invention sera mieux comprise à la lecture de la description qui va suivre, donnée uniquement à titre d'exemple et faite en se référant aux dessins annexés, sur lesquels :
- la Figure 1 montre une vue en coupe de l'assemblage selon l'invention avec un support fixe équipé d'une plaque de raccord et d'une glissière de réception d'un réservoir ainsi que le réservoir équipé d'une plaque complémentaire, en position désaccouplée ;
- la Figure 2 montre une vue en coupe transversale de l'assemblage, en position désaccouplée et selon la ligne brisée II-II de la Figure 1 ;
- la Figure 3 montre le détail III de la Figure 1 à plus grande échelle ;
- la Figure 4 montre l'assemblage de l'invention selon une coupe au niveau du support fixe et de la plaque de raccord flottante analogue à celle de la Figure 1, mais la plaque de raccord flottante étant accouplée avec la plaque de raccord complémentaire ;
- la Figure 5 montre une vue isométrique éclatée de deux éléments de recentrage à quatre pentes inclinées coopérant respectivement avec quatre surfaces inclinées ménagées sur le support fixe.
- la Figure 6 montre en coupe une variante de l'assemblage selon l'invention sans plaque butée, le support fixe ayant une surface torique coopérant avec l'élément de recentrage, en position accouplée, les raccords n'étant pas représentés.

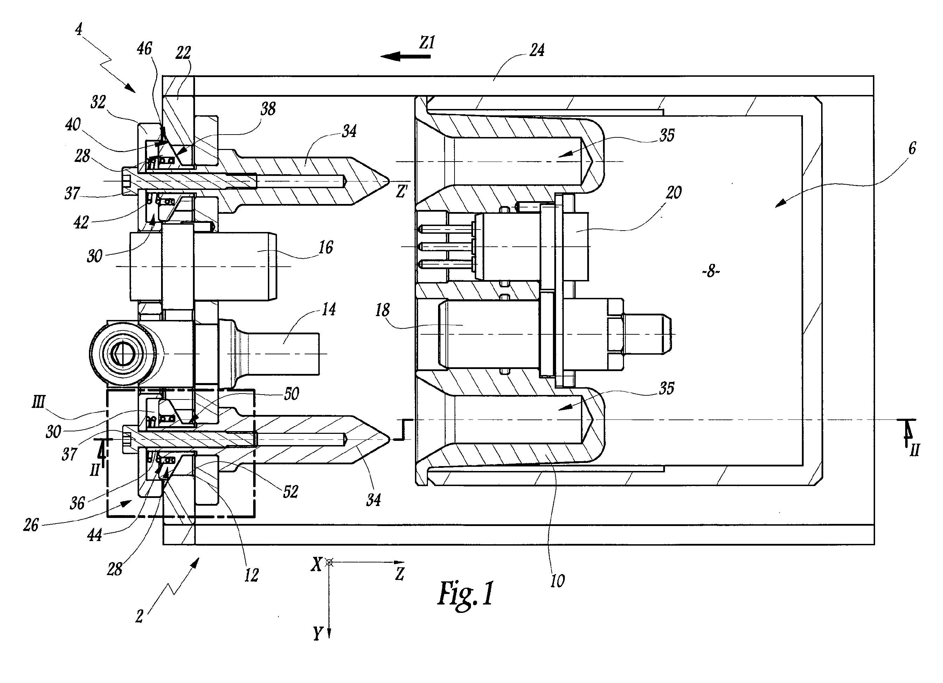

Sur la figure 1 est représenté un assemblage selon l'invention, désigné par la référence générale 2.

L'assemblage 2 comprend un ensemble de raccord 4 et un ensemble de raccord complémentaire 6.

L'ensemble de raccord complémentaire 6 comprend un réservoir de liquide 8, et une plaque de raccord complémentaire 10. La plaque de raccord complémentaire 10 est fixée au réservoir de liquide 8 (eau ou autre).

L'ensemble de raccord 4 comporte une plaque de raccord 12 flottante munie d'éléments de raccord fluidique 14 et/ou électrique 16 adaptés pour être connectés à la plaque de raccord complémentaire 10. A cet effet, la plaque de raccord complémentaire 10 est munie, pour chaque élément de raccord 14, 16, d'un élément de raccord complémentaire, tel qu'un élément de raccord fluidique complémentaire 18 et/ou un élément de raccord complémentaire électrique 20.

Les éléments de raccord fluidique 14/électrique 16 définissent une direction de raccordement Z parallèle à la direction longitudinale des éléments de raccord 14, 16, et qui est la direction d'enfichage des éléments 14, 16 dans les éléments de raccord complémentaires 18, 20. L'assemblage 2 définit deux directions X et Y qui sont perpendiculaires l'une à l'autre et perpendiculaires à la direction de raccordement Z. Les deux directions X et Y définissent un plan de déplacement X-Y perpendiculaire à la direction de raccordement Z. L'assemblage définit également un sens d'enfichage Z1, qui est le sens d'enfichage de l'ensemble de raccord complémentaire 6 dans l'ensemble de raccord 4 (cf. Figure 1).

L'ensemble de raccord 4 est muni d'un support 22 fixe et d'une glissière de réception 24 s'étendant dans la direction de raccordement Z.

La plaque de raccord 12 est flottante dans le plan de déplacement X-Y par rapport au support 22, c'est-à-dire solidaire, avec possibilité de déplacement dans le plan de déplacement X-Y, du support 22 fixe, lui-même solidaire de la glissière de réception 24 du réservoir 8 de liquide. La plaque 12 est fixe selon la direction de raccordement Z par rapport au support 22 fixe, éventuellement aux jeux de fonctionnement près. La plaque de raccord 12 est donc mobile par rapport au support 22 uniquement dans le plan de déplacement X-Y. La glissière de réception 24 et le support 22 fixe équipent par exemple une station de distribution de liquide dans une chaîne de production agro-alimentaire.

La connexion de la plaque de raccord 12 et de la plaque de raccord complémentaire 10 permet le raccordement d'un connecteur électrique, constitué des éléments de raccord 16, 20, pour la transmission d'informations comme le niveau du réservoir 8, la température du liquide du réservoir 8, la viscosité du liquide, le type de liquide, la transmission d'une alimentation d'un moteur de brassage du liquide et d'au moins un connecteur fluide, constitué des éléments de raccord 14, 18, pour le passage du liquide depuis ou vers le réservoir 8.

L'ensemble de raccord 4 comprend également un dispositif de flottabilité 26 entre la plaque 12 et le support 22 permettant le déplacement selon le plan de déplacement X-Y de la plaque de raccord 12 par rapport au support 22.

Le dispositif de flottabilité 26 comprend au moins un élément de recentrage 28, dans le cas présent deux éléments de recentrage 28, et des moyens de rappel élastique 30.

L'ensemble de raccord 4 définit une position moyenne des éléments de raccord 14, 16 par rapport au support 22 fixe en configuration déconnectée de la plaque 12. Cette position moyenne est représentée sur la figure 1 et correspond à une position moyenne théorique de l'amplitude du débattement que permet le dispositif de flottabilité 26 selon la direction X et selon la direction Y.

Le dispositif de flottabilité 26 définit une position unique et déterminée de repos de la plaque de raccord 12 par rapport au support 22. Cette position de repos correspond à la position moyenne des éléments de raccord 14, 16 par rapport au support 22. Le dispositif de flottabilité 26 recentre la plaque 12 en position de repos, et ramène donc les éléments de raccord 14, 16 vers leur position moyenne en configuration déconnectée de la plaque 12.

En position déconnectée de repos de la plaque 12, tous les éléments de raccord 14, 16 portés par la plaque de raccord 12 traversent le support 22 fixe avec un jeu selon les directions X et Y. Ce jeu permet le déplacement selon le plan de déplacement X-Y des éléments de raccord 14, 16 lors de l'opération de raccordement des plaques 10, 12.

L'ensemble de raccord 4 et l'ensemble de raccord complémentaire 6 définissent au moins une position de décalage relatif lorsque les éléments de raccord 18, 20 de l'ensemble de raccord complémentaire 6 sont décalés dans le plan de déplacement X-Y par rapport aux éléments de raccord 14, 16 de l'ensemble de raccord 4 en configuration déconnectée, au début de l'accouplement. La ou les positions de décalage relatif extrêmes sont délimitées par la glissière 24 qui guide l'ensemble de raccord complémentaire 6 par rapport au support fixe 22 pour son raccordement à l'ensemble de raccord 4.

L'ensemble de raccord 4 et l'ensemble de raccord complémentaire 6 sont configurés de telle sorte que, lorsque l'ensemble de raccord complémentaire 6 est rapproché de l'ensemble de raccord 4 selon le sens de raccordement Z1 en vue d'accoupler les deux ensembles, un défaut d'alignement entre les éléments de raccords complémentaires 18, 20 de l'ensemble de raccord complémentaire 6 et les éléments de raccords 14, 16 de l'ensemble de raccord 4 est rattrapé et l'ensemble de raccord 4 est aligné à l'ensemble de raccord complémentaire 6 de telle sorte que les éléments de raccord 14, 16 se connectent aux éléments de raccord 18, 20 et ceci grâce au dispositif de flottabilité 26.

L'ensemble de raccord 4 comporte deux colonnes de guidage 34 qui s'étendent selon la direction Z et qui sont fixées sur la plaque de raccord 12. Chaque colonne de guidage 34 comporte une extrémité libre chanfreinée tournée vers la plaque de raccord complémentaire 10 au début du raccordement. Chaque colonne de guidage 34 est coaxiale à l'élément de recentrage 28 associé, c'est-à-dire que l'élément de recentrage 28 coulisse le long d'un axe coaxial avec l'axe longitudinal de chaque colonne de guidage 34 associée. Pour chaque élément de recentrage 28, l'ensemble de raccord 4 est muni d'un axe de guidage 36, solidaire de la plaque 12, le long duquel est monté coulissant l'élément de recentrage 28. En l'occurrence, chaque axe de guidage 36 prolonge une colonne de guidage 34.

Chaque axe de guidage 36 est un élément de guidage selon la direction Z de l'élément de recentrage 28 et solidarise l'élément de recentrage 28 avec la plaque 12 dans le plan X-Y.

Le dispositif de flottabilité 26 comprend une plaque butée 32.

La plaque de raccord 12 et la plaque butée 32 forment un ensemble solidaire flottant monté en sandwich autour du support 22. La plaque de raccord 12 et la plaque butée 32 sont maintenues de part et d'autre du support 22. La plaque de raccord 12 et la plaque butée 32 sont maintenues de part et d'autre du support 22 par une vis 37 traversant l'axe de guidage 36 et en prise avec la colonne de guidage 34. La plaque 12 est disposée du côté de la plaque complémentaire 10 par rapport au support 22 en phase d'accouplement des plaques 10 et 12. Le dispositif de flottabilité 26, et en particulier la plaque butée 32, est disposé du côté opposé aux éléments de raccord complémentaires 18 et 20 par rapport à la plaque 12. Ainsi, la plaque 12 fait totalement face à la plaque complémentaire 10.

Pour chaque colonne de guidage 34, la plaque de raccord complémentaire 10 est munie d'un logement de colonne 35 complémentaire de la colonne de guidage associée 34. Chaque logement de colonne 35 comporte un chanfrein d'entrée tourné vers la plaque de raccord 12 lors du raccordement.

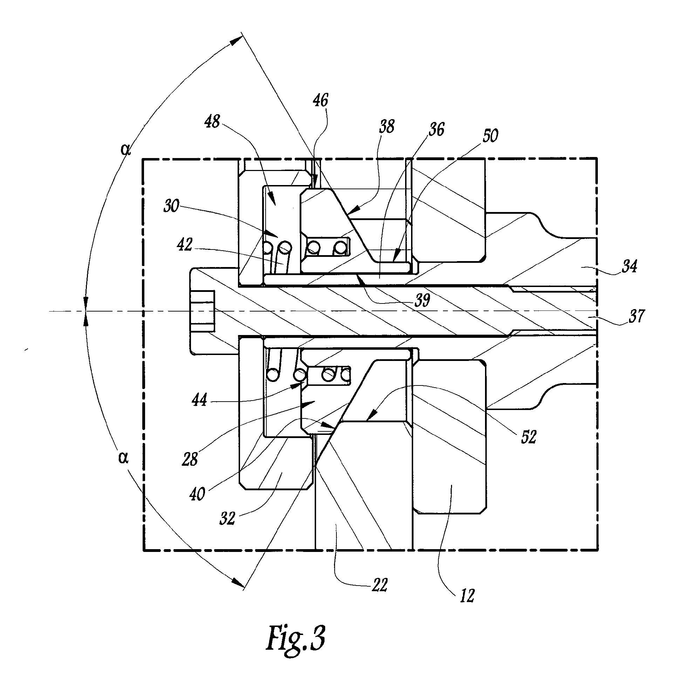

L'élément de recentrage 28 a une surface externe de came 38 qui coopère avec une surface de contre came 40 complémentaire du support 22 fixe. La surface de came 38 est une surface convexe. La surface de contre came 40 est une surface concave. En l'occurrence, l'élément de recentrage 28 est une pièce de révolution sous la forme d'une rondelle dont une surface externe constituant la surface de came 38 est tronconique et qui est percée d'un alésage central longitudinal 39 (cf. Figure 3) complémentaire, aux jeux radiaux de fonctionnement près, au diamètre externe de l'axe de guidage 36 autour duquel l'alésage 39 est monté en coulissement. La surface de contre came 40 est une surface tronconique.

Les deux surfaces 38, 40 sont complémentaires. Elles ont un même angle α d'inclinaison par rapport à la direction Z qui est compris entre 30° et 60°, en l'occurrence 60° sur les figures 1 à 4. Cette configuration garantit un contact d'étendue élevée entre les surfaces 38 et 40 en position de repos de la plaque 12.

L'élément de recentrage 28 est disposé entre la plaque butée 32 et le support 22 selon la direction Z. L'élément de recentrage 28 est repoussé par les moyens de rappel élastique 30 en direction de la surface de contre came 40 du support 22 fixe. Les moyens de rappel élastique 30 comprennent, pour chaque élément de recentrage 28, un ressort 42. Le ressort est disposé entre la plaque butée 32 et l'élément de recentrage 28. Cette configuration garantit que la plaque de raccord 12 est maintenue en butée contre le support 12 selon le sens de raccordement Z1 pour une meilleure précision de positionnement des éléments de raccord en fin d'accouplement. Le ressort 42 est partiellement logé dans un évidement 44 borgne de l'élément de recentrage 28. La longueur de l'évidement 44 est au moins égale à la longueur du ressort 42 totalement comprimé.

Comme visible sur la Figure 3, l'élément de recentrage 28 se prolonge selon la direction Z d'un côté par un premier prolongement cylindrique 46 annulaire participant au guidage axial de l'élément de recentrage 28 dans la plaque butée 32 et formant surface de guidage de cet élément 28. A cet effet, la plaque butée 32 comporte un logement de prolongement 48 sensiblement complémentaire du prolongement 46.

L'élément de recentrage 28 comporte un second prolongement 50 cylindrique dans la direction Z par rapport à la surface de came 38 et la surface de contre came 40 du support 22 se prolonge en un évidement 52 partiellement cylindrique dont l'axe Z' est confondu avec l'axe de révolution de la surface de came 38 tronconique de l'élément de recentrage 28 en position de repos de la plaque 12. Le prolongement 50 cylindrique est logé avec jeu dans l'évidement 52 en configuration déconnectée de la plaque 12 et sa surface externe vient en butée contre l'évidement 52 en position décalée maximale de la plaque de raccord 12 dans le plan X-Y par rapport au support 22. La plaque 12 est alors en butée contre le support 22 selon les directions X et Y.

De plus, le second prolongement 50 cylindrique annulaire forme une surface de guidage de longueur élevée de l'élément de recentrage 28 le long de l'axe de guidage 36.

L'élément de recentrage 28, le ressort 42 et les éléments de guidage selon la direction Z de l'élément de recentrage 28 font partie du dispositif de flottabilité 26 qui permet le déplacement et le rappel de la plaque de raccord 12 vers la position moyenne des éléments de raccord 14, 16 par rapport au support 22.

L'assemblage fonctionne de la manière suivante, lors de l'accouplement. Le réservoir 8 de liquide rempli est engagé dans la glissière de réception 24 et la plaque de raccord complémentaire 10 amenée selon la direction Z1 au contact des colonnes de guidage 34 de la plaque de raccord 12. La surface d'accueil 25 de la glissière de réception 24 garantit qu'il n'y a pas de défaut angulaire, juste un défaut d'alignement selon X et/ou Y entre les axes longitudinaux des éléments de raccord 14,16, des colonnes de guidage 34 portés par la plaque 12 et les axes longitudinaux des éléments de raccord complémentaires 18,20, des logements de colonne 35 portés par la plaque 10. Le défaut de coaxialité met en contact les colonnes de guidage 34 avec les chanfreins d'entrée de leurs logements de colonne 35, et l'effort de connexion selon le sens Z1 crée une composante d'effort sur les colonnes de guidage 34 dans le plan X-Y. Cette composante d'effort se transmet au niveau du contact entre la surface de came 38 de l'élément de recentrage 28 et la surface de contre came 40 associée du support 22 fixe. Cet effort repousse l'élément de recentrage 28 à l'encontre de la force du ressort 42 en éloignant l'élément de recentrage 28 de la plaque de raccord 12.

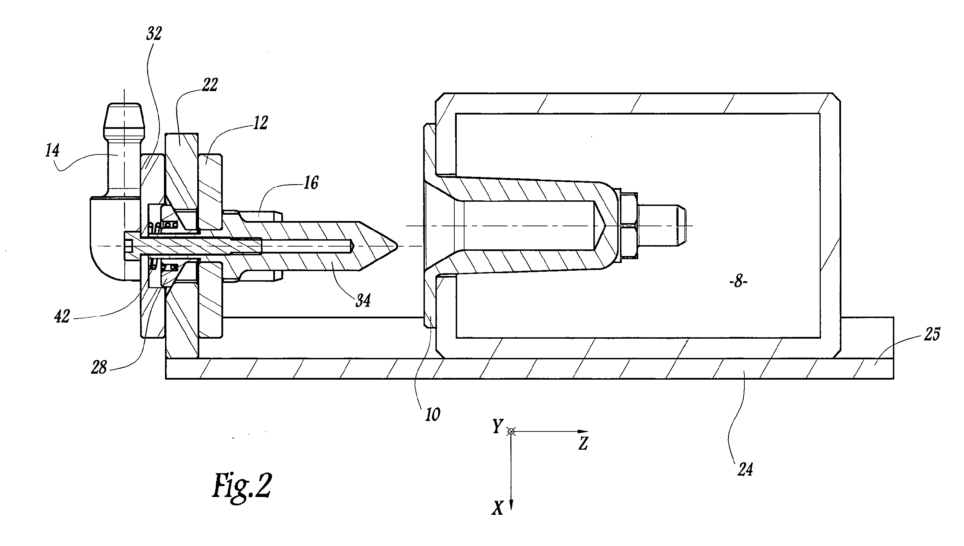

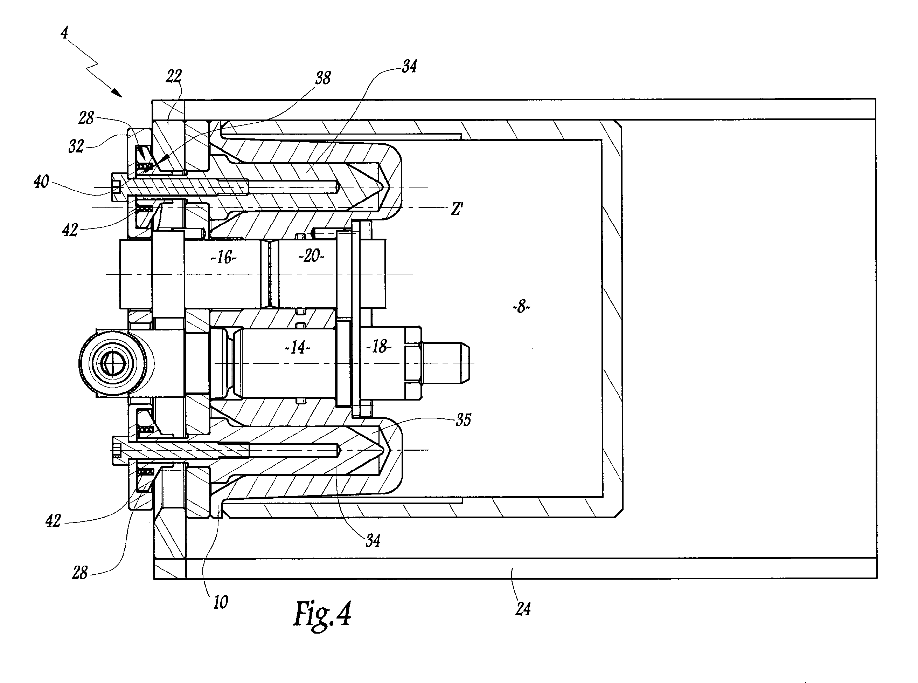

L'élément de recentrage 28 se déplace alors selon le sens de raccordement Z1 par rapport à la plaque de raccord 12 et par rapport au support 22 fixe, la surface de came 38 restant au contact de la surface de contre came 40, ce qui permet à la plaque de raccord 12 de se déplacer dans le plan X-Y par rapport au support 22 fixe. Le mouvement relatif de la plaque de raccord 12 par rapport au support 22 fixe selon les directions X et/ou Y est possible jusqu'à ce que l'élément de recentrage 28 arrive en contact avec l'évidement 52 du support 22 fixe et que simultanément l'élément de recentrage 28 parvienne en contact longitudinal contre la plaque butée 32. Si le défaut d'alignement a une composante selon X et une composante selon Y, l'élément de recentrage 28 se désaligne par rapport à l'axe longitudinal Z' de l'évidement 52 dans le support 22 fixe avec un contact entre l'élément de recentrage 28 et le support 22 fixe qui se fait hors des plans de coupe des figures 1 et 2. Lorsque chaque colonne de guidage 34 est engagée dans son logement de colonne 35 dans la plaque complémentaire 10, mais que les éléments de raccord 14, 18 et 16, 20 ne sont pas encore accouplés, les deux plaques 10 et 12 sont alignées et le rapprochement de la plaque de raccord complémentaire 10 vers la plaque de raccord 12 selon le sens de raccordement Z1 se poursuit avec l'emboîtement des éléments de raccord 14, 18 et 16, 20 alignés jusqu'à mise en butée de la plaque de raccord complémentaire 10 contre la plaque 12. Les éléments de raccord 14 et 16 sont alors accouplés aux éléments complémentaires 18 et 20. La plaque 12 est alors raccordée à la plaque 10, dans une position décalée dans le plan X-Y par rapport au support 22 par rapport à sa position de repos. Cette configuration est montrée sur la figure 4.

La figure 4 représente l'élément de recentrage 28 en butée contre l'évidement 52 du support 22 fixe dans ce plan de coupe, cette position ne pouvant être atteinte que lorsque le défaut d'alignement est exclusivement selon une direction Y parallèle à la surface d'accueil 25.

La position accouplée des plaques de raccord 12 et de la plaque complémentaire 10 est maintenue par verrouillage du réservoir 8 selon la direction Z.

Les moyens élastiques 30 maintiennent la surface de came 38 au contact de la surface de contre came 40 en position de repos, en position décalée de la plaque et pendant toute la phase d'accouplement.

Entre la position de repos de la plaque de raccord 12 et la position décalée de la plaque de raccord 12 par rapport au support 22, l'élément de recentrage 28 s'est déplacé relativement à la plaque de raccord 12 et au support 22 fixe selon la direction Z. L'élément de recentrage 28 s'est déplacé dans les directions X et/ou Y par rapport au support 22, en restant solidaire dans le plan X-Y de la plaque 12.

Un angle α de 60° pour la surface de came 38 permet d'obtenir un alignement de la plaque de raccord 12 avec la plaque 10 avec un effort de connexion modéré et un déplacement de l'élément de recentrage 28 selon Z limité puis un recentrage de la plaque 12 en position de repos sous un effort élastique acceptable. Cet angle α est mesuré par rapport à la direction Z et indiqué sur la Figure 3. Au désaccouplement, le réservoir 8 équipé de la plaque complémentaire 10 est écarté du support 22 fixe selon un sens de désaccouplement, qui va à l'encontre du sens de raccordement Z1, les éléments de raccord 14, 18 et 16, 20 se déconnectent, puis au fur et à mesure du désengagement de chaque colonne de guidage 34 hors de son logement de colonne 35, l'élément de recentrage 28, élastiquement repoussé au contact du support 22 fixe, est ramené vers l'axe longitudinal Z' de son logement et assure le retour de la plaque de raccord 12 dans sa position de repos par rapport au support 22 fixe. Ensuite, le réservoir 8 est retiré de la glissière de réception 24.

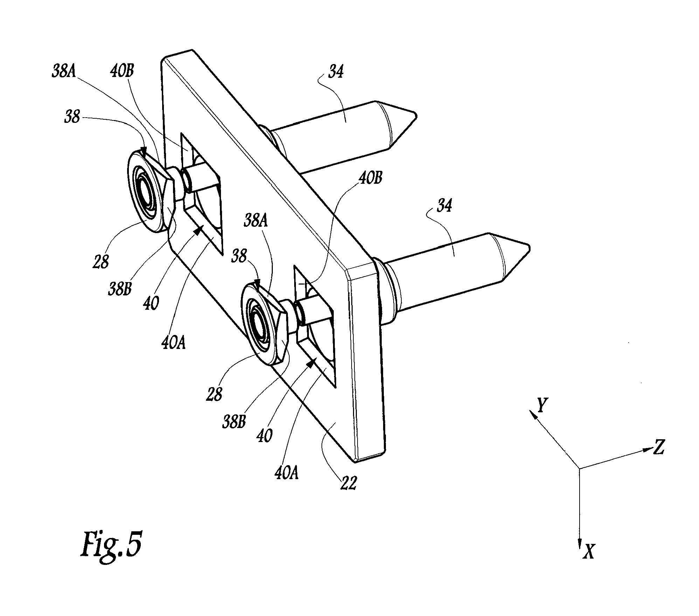

Sur la figure 5 est montré une partie d'une variante d'un ensemble de raccord selon l'invention. Cette variante se distingue du mode de réalisation précédemment décrit uniquement par ce qui suit. Les éléments analogues portent les mêmes références.

Chaque élément de recentrage 28 comporte, au lieu de la surface de came tronconique, une surface 38 de tronc de pyramide à 4 faces, donc avec 4 surfaces planes inclinées par rapport à la direction de raccordement Z. Deux des surfaces planes 38A sont prévues pour la flottabilité selon la direction X et deux surfaces planes 38B sont prévues pour la flottabilité selon la direction Y. Cette variante permet d'avoir des surfaces de contact élevées entre l'élément de recentrage 28 et le support 22 fixe.

De même, au lieu de la surface de contre came tronconique, la surface de contre came est une surface de tronc de pyramide à quatre faces, 40A et 40B.

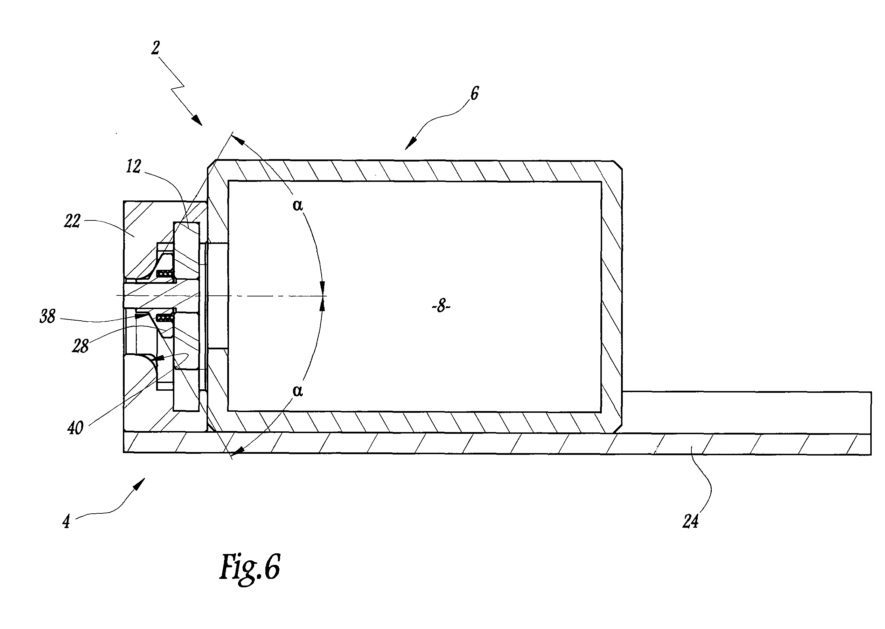

La variante de la Figure 6 comporte les modifications suivantes, qui peuvent toutefois être combinées individuellement aux autres dispositifs décrits. Premièrement, l'élément de recentrage 28 a une surface de came 38 qui coopère avec une surface de contre came 40 du support 22 fixe non complémentaire. Par exemple, la surface de came 38 est conique et la surface de contre came 40 est une surface de tore partiel. En variante non représentée, la surface de came 38 est une surface de révolution torique et la surface de contre came 40 est une surface de révolution en portion de cone.

Deuxièmement, le support 22 fixe assure à lui seul le guidage dans le plan X-Y de la plaque de raccord 12 et s'oppose à un déplacement de la plaque de raccord 12 dans le sens de raccordement Z1 et dans le sens allant à l'encontre de ce sens Z1. L'ensemble 4 ne comporte donc pas de plaque butée 32 mobile. A cet effet, la plaque de raccord 12 est logée mobile dans une rainure complémentaire ménagée dans le support 22. Le ressort repousse l'élément de recentrage 28 selon le sens Z1 contre le support 22.

Enfin, la colonne de recentrage 34 (non représentée en figure 6) n'est pas coaxiale à l'axe de coulissement de l'élément de recentrage 28 par rapport à la plaque 12. La plaque 10 portant les raccords 18,20 et les logements 35 n'est pas représentée mais est fixée sur le réservoir 8.

Les assemblages et ensembles précédemment décrits peuvent être modifiés par l'une ou plusieurs des modifications ci-après.

En variante non représentée, le recentrage de la plaque 12 peut être obtenu avec un élément de recentrage 28 solidaire selon les directions X et Y du support 22 et dont la surface de came 38 est maintenue élastiquement au contact d'une surface de contre came ménagée sur la plaque 12. Au moins l'une parmi la surface de came et la surface de contre came est une surface inclinée selon un angle α de 30° à 60°. La configuration pour laquelle la surface de contre came 40 est ménagée dans le support 22 permet de ne pas fragiliser la plaque 12, déjà équipée de colonnes et d'éléments de raccord, et de diminuer son encombrement.

En variante, seule l'une parmi la surface de came 38 et la surface de contre came 40 est inclinée. L'autre parmi la surface de contre came et la surface de came peut être réduite à une arête. En variante non représentée, la surface inclinée peut être partiellement sphérique. L'angle d'inclinaison de la surface inclinée par rapport à la direction de raccordement Z est alors défini par la tangente à la surface inclinée au niveau du contact entre la surface de came 38 et la surface de contre came 40.

En variante encore, chaque colonne de guidage 34 est agencée sur la plaque complémentaire 10, tandis que la plaque de raccord 12 est munie de chaque logement de colonne 35 adapté pour recevoir la colonne de guidage 34.

En variante encore, le support 22 de la plaque de raccord 12 n'est pas fixe mais déplaçable pour venir connecter la plaque de raccord 12 avec une plaque complémentaire 10 alors fixe. Une glissière de réception du support 22 est alors prévue solidaire de la plaque 10.

En variante, l'axe de guidage 36 est omis et le guidage longitudinal selon la direction de raccordement Z de l'élément de recentrage 28 est assuré uniquement par un logement de l'élément de recentrage ménagé dans la plaque de raccord 12 et/ou par la plaque butée 32 dans laquelle est logée l'élément de recentrage 28.

En variante, la surface de contre came 40 ménagée dans le support 22 fixe entoure sur 360° l'élément de recentrage 28 en position de repos de la plaque.

L'ensemble de raccord et l'assemblage sont susceptibles d'être utilisés pour toutes les applications de recentrage d'une plaque de raccord 12 dans un plan X-Y. On peut prévoir autant de dispositifs de flottabilité que le nécessite la charge de l'ensemble flottant à recentrer.

L'ensemble selon l'invention présente les avantages suivants.

Le recentrage par les éléments de recentrage 28 permet de s'affranchir de défauts initiaux et donc de supprimer ou de limiter le chanfrein d'entrée des logements de colonne 35 et contribue à une plaque complémentaire d'encombrement réduit.

L'encombrement du dispositif de flottabilité est faible selon le sens de raccordement Z en comparaison aux dispositifs de raccord flottants de l'art antérieur.

Le dispositif de flottabilité tient dans l'encombrement axial de l'ensemble de raccord 4.

Le ressort 42 est monté partiellement à l'intérieur de l'élément de recentrage, ce qui limite l'encombrement selon la direction Z.

Un angle α de 60° limite le mouvement axial de l'élément de recentrage pendant l'alignement des plaques ce qui contribue à la compacité selon Z. En variante, l'angle α peut être compris entre 30° et 60°.

L'encombrement de l'assemblage est réduit selon le sens de raccordement Z en comparaison aux dispositifs de raccord flottants de l'art antérieur. En effet, le mouvement de la plaque flottante uniquement dans le plan X-Y associé à une construction qui garantit le contact direct entre la plaque flottante et le support dans la direction Z permet de s'affranchir d'une surcourse de raccordement de la plaque complémentaire.

L'encombrement de l'ensemble est réduit selon le plan X-Y. En particulier, la plaque flottante est disposée à l'extérieur du support ce qui limite l'encombrement de la plaque flottante nécessaire pour implanter les éléments de raccord et de guidage sur la plaque flottante.

Le dispositif de flottabilité est de construction simple en raison d'usinages simples.

Le dispositif de flottabilité est fiable étant donné que ses parties mobiles, telles que l'élément de recentrage, sont protégées de l'extérieur par les plaques 12 et 32 montées en sandwich autour du support 22.

## Revendications

1. Ensemble de raccord (4) comprenant:
- une plaque de raccord (12) équipée d'au moins un élément de raccord électrique (16) et/ou fluidique (14), l'élément de raccord définissant une direction de raccordement (Z) à un élément de raccord électrique (18) et/ou fluidique (20) complémentaire,
- un support (22), la plaque de raccord (12) étant apte à se déplacer par rapport au support (22) dans une position décalée dans un plan (X-Y) perpendiculaire à la direction de raccordement pour le raccordement des élément de raccord (14,16.18,20) et
- un dispositif de flottabilité (26) entre la plaque de raccord et le support,
le dispositif de flottabilité (26) étant apte à recentrer la plaque de raccord (12) dans une position de repos déterminée de la plaque de raccord par rapport au support en configuration déconnectée de la plaque de raccord, depuis ladite position décalée de la plaque (12),
**caractérisé en ce que** le dispositif de flottabilité comprend
d'une part un élément de recentrage (28) solidaire dans le plan (X-Y) de la plaque de raccord (12) et
d'autre part des moyens de rappel élastique (30) d'une surface de came (38) de l'élément de recentrage (28) au contact d'une surface de contre came (40) ménagée sur le support (22), la plaque de raccord (12) et le support (22) étant distincts,
**en ce que** la surface de came (38) et/ou la surface de contre came (40) est inclinée (α) par rapport à la direction de raccordement (Z), **en ce que** la plaque de raccord (12) est fixe selon la direction de raccordement (Z) par rapport au support (22), **en ce que** l'élément de recentrage (28) est mobile selon la direction de raccordement (Z) par rapport à la plaque de raccord (12) et par rapport au support (22) entre la position de repos et ladite position décalée de la plaque (12), **en ce qu'**une plaque butée (32) et la plaque de raccord (12) sont disposées de part et d'autre du support (22) selon la direction de raccordement (Z), et **en ce que** l'élément de recentrage (28) est disposé entre la plaque butée (32) et le support (22).

2. Ensemble selon la revendication 1, dans lequel la surface de came (38) est une surface de révolution et dans lequel notamment la surface de came (38) est une surface externe conique.

3. Ensemble selon l'une quelconque des revendications précédentes, dans lequel l'élément de recentrage (28) est pourvu d'un alésage central (39) et est mobile en coulissement sur un axe de guidage (36) fixé à la plaque de raccord (12).

4. Ensemble selon l'une quelconque des revendications précédentes, dans lequel l'angle (α) d'inclinaison de la surface de came (38) et/ou de la surface de contre came (40) par rapport à la direction de raccordement (Z) est compris entre 30° et 60°.

5. Ensemble selon l'une quelconque des revendications précédentes, dans lequel la surface de contre came (40) coopère avec la surface de came (38) de l'élément de recentrage (28) en position de repos et en position décalée de la plaque (12).

6. Ensemble selon l'une quelconque des revendications précédentes, dans lequel la surface de contre came (40) et la surface de came (38) sont complémentaires, notamment inclinées du même angle (α).

7. Ensemble selon l'une quelconque des revendications précédentes, dans lequel l'élément de recentrage (28) comporte un prolongement (48, 50), selon la direction de raccordement (Z) par rapport à la surface de came (38), formant surface de guidage de l'élément de recentrage (28) selon la direction de raccordement (Z).

8. Ensemble selon l'une quelconque des revendications précédentes, dans lequel les moyens de rappel élastique comprennent un ressort (42) disposé entre l'élément de recentrage (28) et un élément (32) solidaire de l'élément de recentrage (28) dans le plan (X-Y).

9. Ensemble selon l'une quelconque des revendications précédentes, dans lequel la plaque de raccord (12) est fixe selon la direction de raccordement (Z) par rapport au support (22), aux jeux de fonctionnement près.

10. Ensemble selon l'une quelconque des revendications précédentes, dans lequel la plaque de raccord (12) et la plaque butée (32) forment un ensemble solidaire flottant monté en sandwich autour du support (22).

11. Ensemble selon l'une quelconque des revendications précédentes, dans lequel les moyens de rappel élastique (30) sont logés au moins partiellement dans un évidement (44) de l'élément de recentrage (28).

12. Ensemble selon l'une quelconque des revendications précédentes comprenant, pour chaque élément de recentrage (28), une colonne de guidage (34) coaxiale à l'élément de recentrage (28) associé.

13. Ensemble selon l'une quelconque des revendications précédentes, dans lequel le support (22) comprend une surface formant une butée selon une direction (X, Y) perpendiculaire à la direction de raccordement (Z) à la plaque de raccord (12) par rapport au support (22) dans une position décalée de la plaque (12).

14. Ensemble selon l'une quelconque des revendications précédentes, comprenant une glissière de réception (24) fixée au support (22) s'étendant dans la direction de raccordement (Z) et adaptée pour guider l'élément de raccord électrique (20) et/ou fluidique (18) complémentaire à l'élément de raccord dans la phase d'accouplement.

15. Assemblage (2) d'un ensemble selon l'une quelconque des revendications précédentes et d'un ensemble complémentaire (6), l'ensemble complémentaire comprenant au moins un raccord fluidique et/ou électrique complémentaire de chaque élément de raccord électrique (16) ou fluidique (14) fixé à un réservoir (8) de liquide.

## Patentansprüche

1. Anschlussanordnung (4), umfassend:
- eine Anschlussplatte (12), die mit mindestens einem elektrischen (16) und/oder Fluid- (14) Anschlusselement ausgerüstet ist, wobei das Anschlusselement eine Anschlussrichtung (Z) zu einem komplementären elektrischen (18) und/oder Fluid- (20) Anschlusselement definiert,
- einen Träger (22), wobei die Anschlussplatte (12) geeignet ist, sich in Bezug auf den Träger (22) in eine in einer Ebene (X-Y) senkrecht zur Anschlussrichtung versetzte Position für die Verbindung der Anschlusselemente (14, 16, 18, 20) zu bewegen und
- eine schwimmende Vorrichtung (26) zwischen der Anschlussplatte und dem Träger,
wobei die schwimmende Vorrichtung (26) geeignet ist, die Anschlussplatte (12) von der versetzten Stellung der Platte (12) in eine vorbestimmte Ruhestellung der Anschlussplatte in Bezug auf den Träger in einer nicht verbundenen Stellung der Anschlussplatte zu rezentrieren, **dadurch gekennzeichnet, dass** die schwimmende Vorrichtung umfasst einerseits ein Element (28) zur Rezentrierung, das in der Ebene (X-Y) mit der Anschlussplatte (12) verbunden ist und
andererseits Mittel (30) zur elastischen Rückstellung einer Nockenfläche (38) des Rezentrierungselements (28) im Kontakt mit einer Gegennockenfläche (40), die an dem Träger (22) angeordnet ist, wobei die Anschlussplatte (12) und der Träger (22) separat sind,
dass die Nockenfläche (38) und/oder die Gegennockenfläche (40) in Bezug auf eine Anschlussrichtung (Z) geneigt (α) ist, dass die Anschlussplatte (12) gemäß der Anschlussrichtung (Z) in Bezug auf den Träger (22) fest ist, dass das Rezentrierungselement (28) gemäß der Anschlussrichtung (Z) in Bezug auf die Anschlussplatte (12) und in Bezug auf den Träger (22) zwischen der Ruheposition und der versetzten Position der Platte (12) beweglich ist, und dass eine Anschlagplatte (32) und die Anschlussplatte (12) beidseitig des Trägers (22) gemäß der Anschlussrichtung (Z) angeordnet sind und dass das Rezentrierungselement (28) zwischen der Anschlagplatte (32) und dem Träger (22) angeordnet ist.

2. Anordnung nach Anspruch 1, bei der die Nockenfläche (38) eine Umdrehungsfläche ist und insbesondere die Nockenfläche (38) eine äußere konische Fläche ist.

3. Anordnung nach einem beliebigen der vorhergehenden Ansprüche, bei der das Rezentrierungselement (28) mit einer Mittelbohrung (39) versehen ist und gleitend an einer Führungsachse (36), die an der Anschlussplatte (12) befestigt ist, beweglich ist.

4. Anordnung nach einem beliebigen der vorhergehenden Ansprüche, bei der der Neigungswinkel (α) der Nockenfläche (38) oder der Gegennockenfläche (40) in Bezug auf die Anschlussrichtung (Z) zwischen 30° und 60° liegt.

5. Anordnung nach einem beliebigen der vorhergehenden Ansprüche, bei der die Gegennockenfläche (40) mit der Nockenfläche (38) des Rezentrierungselements (28) in der Ruheposition und der versetzten Position der Platte (12) zusammenarbeitet.

6. Anordnung nach einem beliebigen der vorhergehenden Ansprüche, bei der dieGegennockenfläche (40) und die Nockenfläche (38) komplementär sind, insbesondere um denselben Winkel (α) geneigt sind.

7. Anordnung nach einem beliebigen der vorhergehenden Ansprüche, bei der das Rezentrierungselement (28) eine Verlängerung (48, 50) gemäß der Anschlussrichtung (Z) in Bezug auf die Nockenfläche (38) umfasst, die die Führungsfläche des Rezentrierungselements (28) gemäß der Anschlussrichtung (Z) bildet.

8. Anordnung nach einem beliebigen der vorhergehenden Ansprüche, bei der die elastischen Rückstellmittel eine Feder (42) umfassen, die zwischen dem Rezentrierungselement (28) und einem Element (32), das mit dem Rezentrierungselement (28) in der Ebene (X-Y) verbunden ist, aufweisen.

9. Anordnung nach einem beliebigen der vorhergehenden Ansprüche, bei der die Anschlussplatte (12) gemäß der Anschlussrichtung (Z) in Bezug auf den Träger (22) mit engen Funktionsspielen fest ist.

10. Anordnung nach einem beliebigen der vorhergehenden Ansprüche, bei der die Anschlussplatte (12) und die Anschlagplatte (32) eine schwimmende Einheit bilden, die sandwichartig um den Träger (22) herum montiert ist.

11. Anordnung nach einem beliebigen der vorhergehenden Ansprüche, bei der die elastischen Rückstellmittel (30) zumindest teilweise in einer Ausnehmung (44) des Rezentrierungselements (28) aufgenommen sind.

12. Anordnung nach einem beliebigen der vorhergehenden Ansprüche, die für jedes Rezentrierungselement (28) eine Führungssäule (34) aufweist, die koaxial zu dem zugeordneten Rezentrierungselement (28) angeordnet ist.

13. Anordnung nach einem beliebigen der vorhergehenden Ansprüche, bei der der Träger (22) eine Fläche umfasst, die gemäß einer Richtung (X, Y) senkrecht zur Anschlussrichtung (Z) einen Anschlag für die Anschlussplatte (12) in Bezug auf den Träger (22) in einer versetzten Position der Platte (12) bildet.

14. Anordnung nach einem beliebigen der vorhergehenden Ansprüche, eine Aufnahmegleitschiene (24) umfassend, die an dem Träger (22) befestigt ist und die sich in Anschlussrichtung (Z) erstreckt und geeignet ist, das elektrische (20) und/oder Fluid- (18) Anschlusselement komplementär zum Anschlusselement in der Kupplungsphase zu führen.

15. Zusammenstellung (2) einer Anordnung nach einem beliebigen der vorhergehenden Ansprüche und einer komplementären Anordnung, wobei die komplementäre Anordnung (6) mindestens einen FluidAnschluss und/oder elektrischen Anschluss, komplementär zu jedem elektrischen (16) oder Fluid- (14) Anschlusselement aufweist, das an einem Wasserbehälter (8) befestigt ist.

## Claims

1. Connector assembly (4) comprising:
- a connecting plate (12) provided with at least one electrical (16) and/or fluid (14) connection element, with the connection element defining a direction of connecting (Z) to a complementary electrical (18) and/or fluid (20) connection element,
- a support (22), the connecting plate (12) able to be displaced in relation to the support (22) in an offset position in a plane (X-Y) perpendicular to the direction of connecting for the connection of the connection elements (14, 16, 18, 20) and
- a floating device (26) between the connecting plate and the support,
with the floating device (26) able to recentre the connecting plate (12) in a determined idle position of the connecting plate in relation to the support in disconnected configuration of the connecting plate, from said offset position of the plate (12),
**characterised in that** the floating device comprises
on the one hand a recentring element (28) integral in the plane (X-Y) with the connecting plate (12) and
on the other hand means of elastic retraction (30) of a cam surface (38) of the recentring element (28) in contact with a cam follower surface (40) arranged on the support (22), the connecting plate (12) and the support (22) being separate,
**in that** the cam surface (38) and/or the cam follower surface (40) is inclined (α) in relation to the direction of connecting (Z), **in that** the connecting plate (12) is fixed according to the direction of connecting (Z) in relation to the support (22), **in that** the recentring element (28) is mobile according to the direction of connecting (Z) in relation to the connecting plate (12) and in relation to the support (22) between the idle position and said offset position of the plate (12), **in that** a stop plate (32) and the connecting plate (12) are arranged on either side of the support (22) according to the direction of connecting (Z), and **in that** the recentring element (28) is arranged between the stop plate (32) and the support (22).

2. Assembly according to claim 1, wherein the cam surface (38) is a surface of revolution and wherein in particular the cam surface (38) is a conical external surface.

3. Assembly as claimed in any preceding claim, wherein the recentring element (28) is provided with a central bore (39) and is slidably mobile on a guiding shaft (36) fixed to the connecting plate (12).

4. Assembly as claimed in any preceding claim, wherein the angle (α) of inclination of the cam surface (38) and/or of the cam follower surface (40) in relation to the direction of connecting (Z) is between 30° and 60°.

5. Assembly as claimed in any preceding claim, wherein the cam follower surface (40) cooperates with the cam surface (38) of the recentring element (28) in idle position and in offset position of the plate (12).

6. Assembly as claimed in any preceding claim, wherein the cam follower surface (40) and the cam surface (38) are complementary, in particular inclined by the same angle (α).

7. Assembly as claimed in any preceding claim, wherein the recentring element (28) comprises an extension (48, 50), according to the direction of connecting (Z) in relation to the cam surface (38), forming a guiding surface of the recentring element (28) according to the direction of connecting (Z).

8. Assembly as claimed in any preceding claim, wherein the means of elastic retraction include a spring (42) arranged between the recentring element (28) and an integral element (32) of the recentring element (28) in the plane (X-Y).

9. Assembly as claimed in any preceding claim, wherein the connecting plate (12) is fixed according to the direction of connecting (Z) in relation to the support (22), aside from the operating clearances.

10. Assembly as claimed in any preceding claim, wherein the connecting plate (12) and the stop plate (32) form a floating integral assembly mounted sandwiched around the support (22).

11. Assembly as claimed in any preceding claim, wherein the means of elastic retraction (30) are housed at least partially in a recess (44) of the recentring element (28).

12. Ensemble as claimed in any preceding claim comprising, for each recentring element (28), a guide column (34) coaxial to the associated recentring element (28).

13. Assembly as claimed in any preceding claim, wherein the support (22) comprises a surface forming an stop according to a direction (X, Y) perpendicular to the direction of connecting (Z) to the connecting plate (12) in relation to the support (22) in an offset position of the plate (12).

14. Assembly as claimed in any preceding claim, comprising a receiving slide (24) fixed to the support (22) extending in the direction of connecting (Z) and adapted to guide the complementary electrical (20) and/or fluid (18) connection element to the connection element in the coupling phase.

15. Assembling (2) of an assembly as claimed in any preceding claim and a complementary ensemble (6), with the complementary ensemble comprising at least one fluid and/or electrical connection complementary with each electrical (16) or fluid (14) connection element fixed to a tank (8) of liquid.
